Europäisches Patentamt

European Patent Office

Office européen des brevets

(19)

(11) EP 1 528 375 A1

(12) EUROPEAN PATENT APPLICATION

(43) Date of publication:
04.05.2005 Bulletin 2005/18

(51) Int Cl.$^7$: G01F 23/26

(21) Application number: 03256886.7

(22) Date of filing: 30.10.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicant: Harald, Philipp
Southhampton, Hampshire SO31 4RH (GB)

(72) Inventor: Harald, Philipp
Southhampton, Hampshire SO31 4RH (GB)

(74) Representative: Haines, Miles John et al
D Young & Co
120 Holborn
London EC1N 2DY (GB)

(54) **Level sensor**

(57)    A level sensor (28,42) for measuring the level of a substance in a container is described. The level sensor includes first (30,50,60,70,82) and second (32,52,62,72,84) level-sensing elements which provide corresponding first and second response signals ($C_1$, $C_2$). The first and second response signals are dependent on substance level according to different response functions ($RF_1$, $RF_2$). This makes it possible to compare the first and second response signals in a way which provides an estimate of substance level which is sensitive to substance level, but insensitive to other variables which can affect the individual response signals. With a capacitance based level sensor, these variables can include changes in temperature or grade or type of substance which lead to a change in dielectric constant of the substance. The comparison may include forming a ratio of the two response signals, the difference in response functions meaning that the ratio maintains a dependence on substance level, but dependence on other variables such as temperature or viscosity is partially or wholly cancelled out.

Fig. 2 (PRIOR ART)

Printed by Jouve, 75001 PARIS (FR)

**Description**

## BACKGROUND OF THE INVENTION

The invention relates to level sensors for sensing the level of a substance in a container.

Level sensors are used in many applications where an indication of a level of a substance is required. Level sensors can be used to measure fluids, for example fuel in a fuel tank, or solids, for example toner powder in a toner cartridge. A level sensor will generally be configured to output a signal which depends on substance level. The signal can then be processed to generate an estimate of substance level. This is done by taking account of an assumed response of the level sensor to substance level. One type of known level sensor is based on capacitance measurement and is known as a capacitive level sensor.

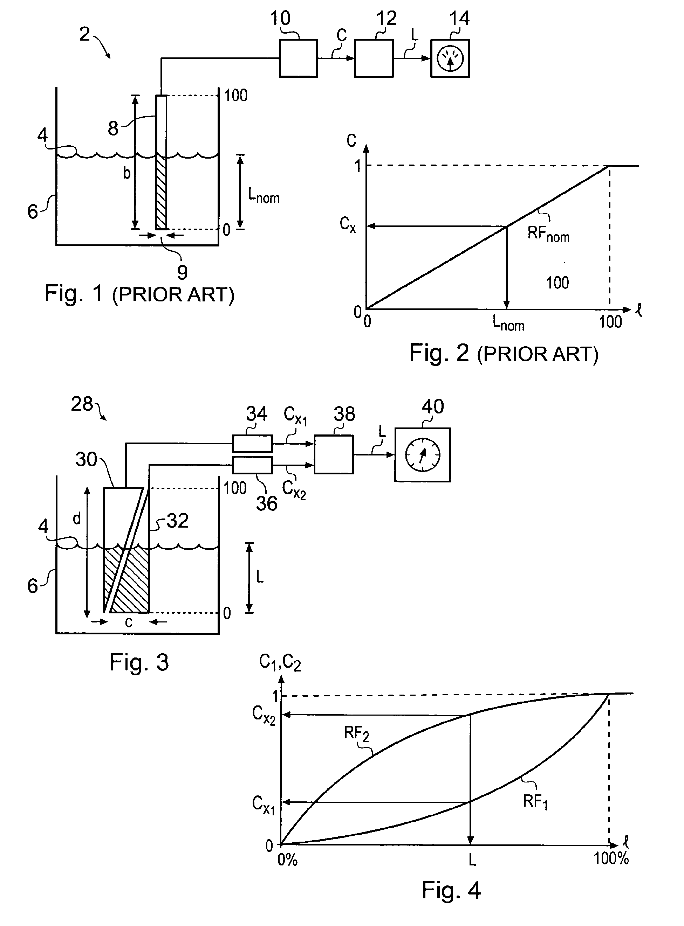

Figure 1 is a schematic diagram showing a conventional capacitive level sensor 2. The illustrated capacitive level sensor is being used to measure the level of a substance 4 in a container 6. The capacitive level sensor comprises a capacitive level-sensing element 8 connected to a driver circuit 10. The driver circuit 10 is configured to measure the capacitance of the level-sensing element and to output a corresponding signal C representative of the measured capacitance. The driver circuit 10 operates according to known principles for measuring capacitance. The signal C is passed to a processor 12 which converts the signal to an estimate of substance level L. This is done according to an assumed relationship between the capacitance of the level-sensing element and substance level. This relationship is known as the level-sensing element's response function. The estimated substance level L may then be displayed using a gauge 14.

The level-sensing element 8 comprises a thin rectangular dielectric-coated electrode of width $a$ and height $b$. The capacitance of the level-sensing element 8 depends on how much of its surface area is immersed in the substance. This is because of differences in dielectric constant between the substance and the surrounding medium, which in this case is air. The capacitive level sensor 2 is sensitive to substance levels within a height range which corresponds to the vertical extent of the level-sensing element, i.e. between the levels marked 0 and 100 in Figure 1. For ease of description, substance level is considered here relative to the lower extent of the level-sensing element. Substance levels below the lower extent of the level-sensing element are considered to be 0 (i.e. the container considered empty). Similarly, substance levels above the upper extent of the level-sensing element are considered to be 100% (i.e. the container considered to be full). A rectangular level-sensing element, such as shown in Figure 1, has a capacitance C which, to a first approximation, is linearly proportional to the substance level l, i.e.

$$C = k \bullet al \qquad \text{(Equation 1),}$$

where $al$ is the surface area of the level-sensing element covered by the substance and k is a constant of proportionality that includes a dependence on the dielectric constant of the substance.

Figure 2 is a graph schematically showing the nominal capacitance C of the level-sensing element as a function of substance level $l$ for the level sensor of Figure 1. This nominal response function is shown as a solid line and marked $RF_{nom}$. Substance level $l$ ranges from 0% to 100%, where 0% and 100% correspond to the levels marked 0 and 100 in Figure 1. Capacitance C is normalized such that it ranges between 0 and 1, with 0 corresponding to the capacitance of the level-sensing element when it is surrounded by air (i.e. 0% substance level) and 1 corresponding to the capacitance of the level-sensing element when it is surrounded by substance (i.e. 100% substance level).

If the substance level is mid-way between 0% and 100%, a capacitance $C_x$ mid-way between 0 and 1 is measured. The processor 12 is configured to convert this into an nominal estimate of the fluid level $L_{nom}$ by reference to the nominal response function $RF_{nom}$. In this example, $L_{nom}$ is approximately 60%.

The accuracy of a capacitive level sensor depends not only on its ability to accurately measure a capacitance $C_x$ of a level-sensing element, but also on the accuracy to which the nominal response function of the level-sensing element is known. A problem with conventional level sensors is that the level sensor output will frequently depend on other parameters in addition to the substance level. This means a level-sensing element's actual response function $RF_{act}$ can differ from the nominal response function $RF_{nom}$ that it is assumed to have when estimating substance level.

In the case of the capacitive level-sensor shown in Figure 2, the response function of the level-sensing element depends strongly on the dielectric constant of the substance in the container. This dependency is accounted for in the initial determination of the nominal response function $RF_{nom}$ used by the processor to calculate substance level. However, the nominal response function $RF_{nom}$ used by the processor will not be appropriate if the dielectric constant of the substance is different to that assumed when $RF_{nom}$ is initially determined. Changes in dielectric constant can occur due to changes in temperature, chemical changes in the substance, or changes in the type or quality of substance being measured. For example, the dielectric constant of petrol (i.e. gasoline) can change by several tens of percent over normal temperature fluctuations. The quality and source of petrol being used can also affect the dielectric constant.

This means that the actual response function $RF_{act}$ of the level-sensing element is frequently different to the nominal response function $RF_{nom}$, but it is the nominal response function that is used to determine substance level. This difference leads to inaccuracies in estimated substance level.

In addition, the dielectric constant of a substance may also vary throughout the substance, for example in the case of vertically stratified substances. A container may hold two different grades of substance which are layered, or stratification may occur as a result of thermal gradients, particularly in tall storage tanks. Substance stratification can be another source of inaccuracy as it distorts a level-sensing element response function further still.

One attempt to address the problems associated with changing dielectric constants in capacitive level sensors of the kind described above includes the use of a reference electrode arranged to be permanently immersed in the substance. Because the reference electrode is fully immersed, its capacitance is sensitive to changes in dielectric constant and not to changes in fluid level. This means the capacitance of the reference electrode can be used to estimate the dielectric constant of the substance and thus to modify the response function employed by the processor in determining substance level. However, it is not always convenient to appropriately arrange a reference electrode so that it is always immersed. In addition, the capacitance of the electrical wiring to the reference electrode which passes through the substance can introduce a component to the overall capacitance of the reference electrode which depends on substance level. Furthermore, this technique does not address inaccuracies caused by substance stratification.

## SUMMARY OF THE INVENTION

According to a first aspect of the invention, there is provided a level sensor for determining a substance level, the level sensor comprising: a first level-sensing element operable to provide a first response signal which depends on substance level according to a first response function; a second level-sensing element operable to provide a second response signal which depends on substance level differently from the first level-sensing element according to a second response function that is different from the first response function; and a processor operable to process the first response signal and the second response signal in order to extract information regarding substance level therefrom.

The provision of first and second level-sensing elements provides two estimates of substance level. Each estimate will generally be affected by other variables. Although the dependence of each estimate on these variables will be similar, because the first and second level-sensing elements have different dependence on substance level, i. e. different response functions, the first and second response signals can be compared in a way which provides an estimate of substance level which is sensitive to substance level but insensitive to the other variables. The comparing may, for example, include forming a ratio of the first and second response signals in which the dependencies of each response signal on the other variables cancels out. In other examples, the comparison of the first and second response signals may include reference to look-up-tables or fitted functions which provides an estimate of substance level based on the first and second response signals. Appropriate look-up-tables and/or fitted functions can be determined by calibration of the level-sensing element.

In preferred embodiments of the invention the sensing elements are at least partially co-extensive in one dimension of extent.

At least one of the first and second response function may be a non-linear response function. This is an efficient way of ensuring that two different response functions are provided.

There are a number of ways in which differences in response functions can be created. In one example, differences in the first and second response functions may be due to providing the first and second level-sensing elements with different geometries. This is appropriate where level-sensing elements have response functions that depend on their physical shape, and in particular on which parts of their shape are immersed in the substance. Since it is often easy to fabricate level-sensing electrodes of any desired shape this approach provides an easy way for defining response functions of individual level-sensing elements having almost any desired form.

In another example, differences in the first and second response functions may be due to the first and second level-sensing elements having different coatings. This can provide a useful way of defining response functions in cases where it is not appropriate to use differences in geometry, perhaps because the response functions of the level-sensing elements are not sensitive to geometry or where space constraints prohibit the use of appropriate geometries. Differences in coating may include differences in coating material and/or differences in coating thickness variations.

Similar level-sensing elements can also be arranged to provide different response functions due to differences in placement of the level-sensing elements. For example, two identical level-sensing electrodes can be maintained in different orientations, e.g. one inverted relative to the other. In another example, providing a vertical offset between two level-sensing elements can also allow give appropriately different response functions. In another configuration, two identical level-sensing elements may be provided which are differently inclined to the vertical. This may be appropriate, for example, where response functions of the level-sensing elements are dependent on a separation between themselves and another feature, such as a reference plane.

Any of these various ways of providing different response functions can be combined in a single level sensor if desired.

The first and second level-sensing elements may be capacitive level-sensing elements and so provide for a capacitive level sensor. Capacitive level-sensing elements are relatively simple devices which can readily be used in many level-sensing applications. In addition because of the strong dependence of the capacitance of a capacitive level-sensing element on geometry, appropriately different response functions can easily be provided.

In one example, a capacitive level-sensing elements may comprise an electrode having a face of generally triangular shape. Triangular shaped electrodes provide for a level-sensing element which is simple and easy to fabricate reliably but which can provide a suitable response function. In addition, the response function of triangular electrodes is relatively easy to represent mathematically. This makes it easier to provide a level sensor without needing to perform complex calibration estimates or experiments which might otherwise be required using some other configurations. In one particular example, two similarly sized triangular-electrode capacitive level-sensing elements are used, one placed inverted relative to the other. This placement of the level-sensing elements provides suitable differences in response function with the benefit of employing a reduced number of different parts that need to fabricated.

In another example, a capacitive level-sensing element may comprise a helical winding with varying pitch. This arrangement also provides for a level-sensing element which is simple and easy to fabricate reliably. In one example, both level-sensing elements comprise identical helical windings and are placed with one inverted relative to the other. As above, this placement provides suitably different response functions but while using a common part that needs to fabricated.

The first and second capacitive level-sensing elements may be secured to a curved mount. This arrangement makes for a compact level sensor which can still rely on employing differences in geometry to provide for differences in response functions. The capacitive level sensor may further comprise a backing plate connected to an electrical ground and positioned adjacent to the first and second capacitive level-sensing elements so as to increase their capacitance. Use of a backing plate with capacitive level-sensing elements can increase the capacitance of the individual level-sensing elements while largely maintaining the different forms of their response functions. This can allow for more accurate estimates of substance level since higher capacitances are generally easier to measure accurately.

The backing plate may at least partially surrounds at least one of the first or second capacitive level-sensing elements. Enclosing the level-sensing elements allows the backing plate to shield the level sensing elements from external interference.

The level sensor may further comprise a third level-sensing element arranged to provide a third response signal which depends on substance level differently from the first and second level-sensing elements according to a third response function that is different from the first and second response functions and the processor is further operable to compare the third response signal and at least one of the first and second response signals. Use of a third, or even more, additional level-sensing elements allows for increased statistical accuracy when estimating a substance level.

According to a second aspect of the invention, there is provided a method for determining a substance level comprising: providing a first response signal which depends on substance level according to a first response function; providing a second response signal which depends on substance level differently from the first response signal according to a second response function that is different from the first response function; and processing the first and second response signals in order to extract information regarding substance level therefrom.

## BRIEF DESCRIPTION OF THE DRAWINGS

For a better understanding of the invention and to show how the same may be carried into effect reference is now made by way of example to the accompanying drawings in which:

Figure 1 schematically shows a conventional level sensor for measuring the level of a substance in a container;

Figure 2 is a graph schematically showing a nominal response function $RF_{nom}$ of a level-sensing element of the level sensor shown in Figure 1;

Figure 3 schematically shows a level sensor for measuring the level of a substance in a container according to a first embodiment of the invention;

Figure 4 is a graph schematically showing response functions $RF_1$, $RF_2$ of two level-sensing elements of the level sensor shown in Figure 1;

Figure 5 is a graph schematically showing a ratio of the two response functions shown in Figure 4 as a function of substance level;

Figure 6 is a graph schematically showing an estimate of substance level $L_{est}$ as a function of substance level made using the level sensor shown in Figure 3;

Figure 7 is a graph schematically showing response functions $RF^a_1$, $RF^a_2$ of two level-sensing elements, a ratio $R^a$ of the two response functions and an estimate of substance level $L^a_{est}$ as a function of substance level for the level sensor shown in Figure 3 with a substance of dielectric constant $\varepsilon^a$;

Figure 8 is a graph schematically showing response functions $RF^b_1$, $RF^b_2$ of two level-sensing elements, a ratio $R^b$ of the two response functions and an estimate of substance level $L^b_{est}$ as a function of substance level for the level sensor shown in Figure 3 with a substance of dielectric constant $\varepsilon^b$;

Figure 9 is a graph schematically showing response functions $RF^c_1$, $RF^c_2$ of two level-sensing elements, a ratio $R^c$ of the two response functions and an estimate of substance level $L^c_{est}$ as a function of substance level for the level sensor shown in Figure 3 with a substance having a vertically stratified dielectric constant;

Figure 10A schematically shows a front view of a level sensor for measuring the level of a substance in a container according to a second embodiment of the invention;

Figure 10b schematically a side view of parts of the level sensor of Figure 10A;

Figure 11 schematically shows in perspective view two level-sensing elements and a backing plate for use with a level sensor according a third embodiment of the invention;

Figure 12A schematically shows in perspective view two level-sensing elements mounted on a dielectric cylinder for use with a level sensor according a fourth embodiment of the invention;

Figure 12B schematically shows in perspective view the two level-sensing elements of Figure 12A surrounded by a cylindrical backing plate;

Figure 13 schematically shows level-sensing elements of a level sensor for measuring the level of a substance in a container according to a fifth embodiment of the invention;

Figures 14A-C schematically show level-sensing elements of a level sensor for measuring the level of a substance in a container according to a sixth embodiment of the invention; and

Figure 15 schematically shows level-sensing elements of a level sensor for measuring the level of a substance in a container according to a seventh embodiment of the invention.

## DETAILED DESCRIPTION

Figure 3 is a schematic diagram showing a level sensor 28 for determining a substance level according to a first embodiment of the invention. The level sensor is a capacitive-type level sensor and is being used in the illustrated example to measure the level of a substance 4 in a container 6. The level sensor comprises first and second level-sensing elements 30, 32 connected to respective first and second driver circuits 34, 36. The first driver circuit 34 is configured to measure the capacitance of the first level-sensing element 30 and to output a corresponding first response signal $C_1$. The second driver circuit 36 is configured to measure the capacitance of the second level-sensing element 32 and to output a corresponding second response signal $C_2$. The first and second driver circuits 34, 36 can be of any known type. In this example charge-transfer type driver circuits are employed, for example of the kind described in reference [1]. The first and second response signals $C_1$, $C_2$ are passed to a processor 38 which generates an estimated substance level $L_{est}$ as described further below. The estimated substance level $L_{est}$ may then be displayed using a gauge 40 or otherwise used as required.

The first and second response signals $C_1$, $C_2$ depend on the actual substance level $l$ according to respective first and second response functions $RF_1$, $RF_2$. The first and second level-sensing elements are configured, for example by virtue of their geometry or placement, such that the first and second response functions $RF_1$, $RF_2$ are different.

The first and second level-sensing elements 30, 32 respectively comprise first and second right-triangular dielectric-coated electrodes having bases of width c and having heights d. The first level-sensing element 30 is positioned in the container such that its base is uppermost and parallel to a surface of any substance in the container. The second level-sensing element 32 is placed alongside, although inverted, as shown in Figure 3. The level-sensing elements may be mounted in any of a number of ways, for example they may be supported on a frame attached to a side of the container. The level sensor 28 is sensitive to substance level $l$ within a height range which corresponds to the overlapped vertical extent of the first and second level-sensing elements, i.e. between the levels marked 0 and 100 in Figure 3. For ease of description substance levels are considered relative to the lower extent of the overlapping level-sensing elements 30, 32. Substance levels below this lower extent are considered to be 0 (i.e. the container considered empty). Similarly, substance levels above the upper extent of the overlapping level-sensing elements are considered to be 100% (i.e. the container considered full). If in a given application the level sensor is required to be sensitive to substance levels ranging from the very bottom to the very top of a container, the level-sensing elements are simply appropriately sized so as to span the full height of the container.

As above, the capacitance of the first and second level-sensing elements depends to a first approximation on how much of their respective surface areas are immersed in the substance. Accordingly, for the first level-sensing element the capacitance $C_1$ depends on substance level $l$ according to

$$C_1 = k \bullet \left[ \frac{cl^2}{2d} \right] \qquad \text{(Equation 2),}$$

where

$$\left[ \frac{cl^2}{2d} \right]$$

is the surface area of the first level-sensing element covered by the substance and $k$ is a constant of proportionality that includes a dependence on the dielectric constant of the substance.

The capacitance of the second level-sensing element depends on $l$ according to

$$C_1 = k \bullet \left[ cl - \frac{cl^2}{2d} \right] \qquad \text{(Equation 3),}$$

where

$$\left[ cl - \frac{cl^2}{2d} \right]$$

is the surface area of the second level-sensing element covered by the substance.

Equation 2 describes the response function $RF_1$ of the first level-sensing element and Equation 3 describes the response function $RF_2$ of the second level-sensing element.

Figure 4 is a graph schematically showing the first and second response functions of the first and second level-sensing elements shown in Figure 3, and respectively described by Equations 2 and 3. The first response function is shown as a solid line marked $RF_1$ and the second response function is shown as a solid line marked $RF_2$. Substance level $l$ ranges from 0% to 100%, where 0% and 100% correspond to the levels marked 0 and 100 in Figure 3. Each response function is normalized such that capacitances $C_1$, $C_2$ ranges between 0 and 1, with 0 corresponding to the capacitance of the level-sensing elements when they are surrounded by air (i.e. 0% substance level) and 1 corresponding to the capacitance of the level-sensing elements when they are surrounded by substance (i.e. 100% substance level). Because in this example the first and second level-sensing elements have the same overall surface area, the first and second response functions are normalized in the same way. However, as will be described later, it is not necessary for the two level-sensing elements to have the same surface areas. In these cases different normalization factors may be applied to each of the first and second response functions to provide curves corresponding to those shown in Figure 4.

With the substance level shown in Figure 3, the first level-sensing element has a capacitance $C_{X1}$ and the second level-sensing element has a capacitance $C_{X2}$. As before, these values are sensitive to changes in the dielectric constant of the substance in the container due to corresponding changes in the value of the constant $k$ in Equations 2 and 3. The processor 38 is operable to form a ratio R of the measured capacitances $C_{X1}$, $C_{X2}$, such that

$$R = \frac{C_{X2}}{C_{X1}} = \frac{k \bullet \left[ cl - \dfrac{cl^2}{2d} \right]}{k \bullet \left[ \dfrac{cl^2}{2d} \right]} \qquad \text{(Equation 4).}$$

Equation 4 reduces to

$$R = \frac{2d - l}{l} \qquad \text{(Equation 5),}$$

which re-arranges to

$$\frac{l}{d} = \frac{2}{R + 1} \qquad \text{(Equation 6).}$$

This means that an estimate of substance level Lest is given by

$$L_{est} = \frac{2}{R + 1} = \frac{2}{\dfrac{C_{x2}}{C_{x1}} + 1} = \frac{2C_{x1}}{C_{x1} + C_{x2}} \qquad \text{(Equation 7)}$$

where d is assumed to be unity so as to normalize Lest such that it is expressed as a percentage between 0% and 100%. The processor may be configured to generate $L_{est}$ directly from the measured capacitances using Equation 7.

Since the ratio R depends on substance level l, but not on the constant of proportionality $k$, R is a parameter which is indicative of substance level in a way which is not affected by changes in $k$. As can be seen from Equation 7, this means that an estimated substance level $L_{est}$ can be calculated based on the measured capacitances $C_{x1}$ and $C_{x2}$ which does not depend on $k$. The particular form of Equation 7 results from the particular level-sensing element geometries employed in the level sensor. Where other geometries of level-sensing elements are used, some examples of which are described further below, different functional relationships between $L_{est}$ and the measured capacitances will arise. However, the same principle applies, i.e. that of comparing the two response signals to generate an estimate of substance level with reduced sensitivity to changes in dielectric constant.

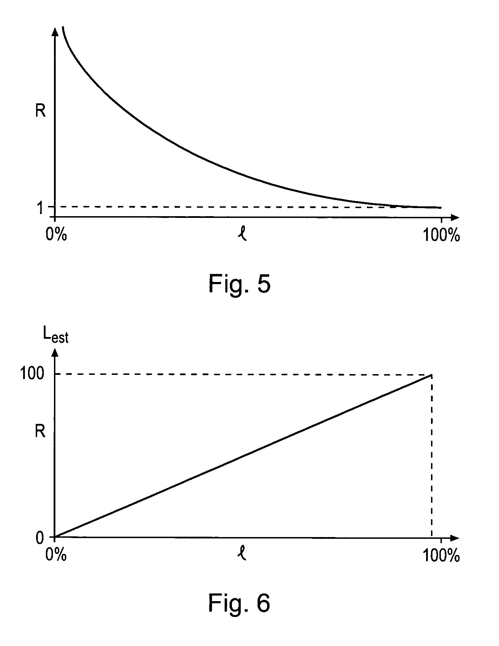

Figure 5 is a graph which schematically shows the ratio R defined by Equation 5 as a function of substance level l for the level sensor shown in Figure 3.

Figure 6 is a graph which schematically shows the estimated percentage substance level $L_{est}$ calculated according to Equation 7 from the ratio R shown in Figure 5 as a function of substance level l. As can be seen from Figure 6, the estimated substance level $L_{est}$ is directly related to actual substance level l.

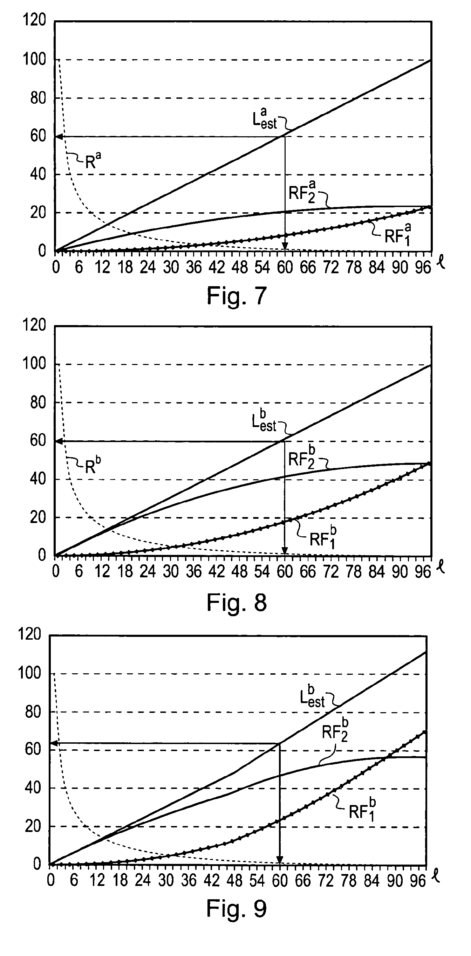

Figure 7 is a graph which schematically shows curves corresponding to those shown in Figures 4, 5 and 6 for the level sensor shown in Figure 3 which have been calculated for a substance having an example dielectric constant of $\varepsilon^a$. The dielectric constant $\varepsilon^a$ and level-sensing element geometries are such that Equation 2 reduces to

$$C_1 = 0.02 \cdot \frac{1}{2} l^2 \qquad \text{(Equation 8),}$$

and Equation 3 reduces to

$$C_1 = 0.02 \bullet \left[ l - \frac{l^2}{2} \right] \qquad \text{(Equation 9),}$$

where d is again assumed to be unity for normalization purposes. In Figure 7, the first and second response functions given by Equations 8 and 9 are labeled $RF_1^a$ and $RF_2^a$. These curves are plotted in arbitrary units (a.u.) after being scaled so as to be apparent on the vertical scale of Figure 7. The curves are otherwise similar to and will be understood from the curves shown in Figure 4. A ratio curve is labeled $R^a$ in Figure 7. This curve is similar to and will be understood from the curve shown in Figure 5. An estimated substance level curve is labeled $L^a_{est}$ in Figure 7. This curve is similar to and will be understood from the curve shown in Figure 6. By way of specific example, the actual substance level l is considered to be 60%. As can be seen from Figure 7, this substance level provides first and second level-sensing element capacitances, as defined by response functions $RF_1^a$ and $RF_2^a$, of around 9 and 21 a.u. respectively. Accordingly, a ratio of 2.33 is determined and this corresponds, using Equation 7, to an estimated substance level $L_{est}$ of 60%. This is confirmed by reading directly from the $L_{est}$ curve shown in Figure 7.

Figure 8 is a graph which is similar to and will be understood from Figure 7. However, the curves shown in Figure 8 are calculated for a substance having an example dielectric constant of $\varepsilon^b$. The dielectric constant $\varepsilon^b$ is twice $\varepsilon^a$ such that Equation 2 reduces to

$$C_1 = 0.04 \cdot \frac{1}{2}l^2 \qquad\qquad \text{(Equation 10)},$$

and Equation 3 reduces to

$$C_1 = 0.04 \bullet \left[ l - \frac{l^2}{2} \right] \qquad\qquad \text{(Equation 11)},$$

again $d$ is assumed to be unity for normalization purposes. In Figure 8, first and second response functions given by Equations 10 and 11 are labeled $RF_1{}^b$ and $RF_2{}^b$. These curves are plotted in the same arbitrary units (a.u.) as used for plotting $RF_1{}^a$ and $RF_2{}^a$ in Figure 7. A ratio curve is labeled $R^b$ in Figure 8 and an estimated substance level curve is labeled $L^b{}_{est}$. The same specific example is used, i.e. a substance level $l$ considered to be 60%. As can be seen from Figure 8, this substance level provides first and second level-sensing element capacitances, as defined by response functions $RF_1{}^b$ and $RF_2{}^b$, of around 18 and 42 a.u. These are twice the capacitances seen with reference to Figure 7 due to the doubling in the dielectric constant. However, though the individual capacitances are different, a ratio of 2.33 is again found. This again corresponds to an estimated substance level $L_{est}$ of 60%. This can also be confirmed by reading directly from the Lest curve shown in Figure 8. Accordingly, by appropriately comparing first and second signal responses from first and second level-sensing elements having differing response functions, the effect of variations in dielectric constant are much reduced. It is noted that with the previously known level-sensor shown in Figure 1, a doubling in dielectric constant would lead to a factor-of-two error in estimates of substance level.

In addition to the reduced sensitivity of the level sensor of Figure 3 to overall changes in dielectric constant, level sensors of this type are also shown to be less sensitive to the effects of a stratified dielectric constant which are problematic for conventional level sensors.

Figure 9 is a graph which is similar to and will be understood from Figures 7 and 8. However, the curves shown in Figure 9 are calculated for a substance having a vertically stratified dielectric constant. The dielectric constant is assumed to be $\varepsilon^b$ for substance levels less than 50% and $\varepsilon^c$ above this level, where $\varepsilon^c$ is one-and-a-half times $\varepsilon^b$ (i. e. three times $\varepsilon^a$).

In Figure 9, first and second response functions are labeled $RF_1{}^c$ and $RF_2{}^c$ respectively. These curves are plotted in the same arbitrary units (a.u.) as used for plotting $RF_1{}^a$, $RF_2{}^a$, $RF_1{}^b$ and $RF_2{}^b$ in Figures 7 and 8. A ratio curve is labeled $R^c$ in Figure 9 and an estimated substance level curve is labeled $L^c{}_{est}$. As can be seen from Figure 9, the stratified dielectric constant causes both the first and second response functions to be warped compared to those seen in Figures 7 and 8. Again, a specific example substance level $l$ of 60% is considered. As can be seen from Figure 9, this substance level provides first and second level-sensing element capacitances, as defined by response functions $RF_1{}^c$ and $RF_2{}^c$, of around 21 and 44 a.u. respectively. Accordingly a ratio of 2.10 is determined and this corresponds, using Equation 7, to an estimated substance level $L_{est}$ of 65%. This estimate is confirmed by reading directly from the Lest curve shown in Figure 9. The effects of a stratified dielectric constant of the form described above are more apparent at 100% substance level where an estimate substance level of around 110% is calculated. However, this compares favorably with conventional level sensors, such as shown in Figure 1, for which an estimated substance level of 300% would be found with the stratified dielectric constant described above if nominal response functions based on a uniform dielectric constant of $\varepsilon^a$ were assumed. An estimated substance level of 150% would be found if a nominal response functions based on an assumed uniform dielectric constant of $\varepsilon^b$ were used.

A dielectric constant stratification in fuels of order 10% is not untypical. With a level sensor of the kind shown in Figure 3, this degree of stratification at mid-level leads to an error in substance level estimate of around 2.4% for a substance level of 100%. It is noted that this relatively small error is achieved without needing to assume any particular base-value for the dielectric constant.

In the above described example, the level sensor is most appropriately configured for use in a substance which is a relatively good conductor and held at a reference potential of the first and second driver circuits 34, 36, for example an absolute or a local ground. The dielectric coating on the electrodes comprising the level-sensing elements prevents electrical shorts occurring. Because the level-sensing elements are in close proximity to the substance which is being held at a reference potential, the capacitance of the level-sensing elements is relatively high. However, in cases where the substance is poorly conducting, isolated level-sensing elements of the kind shown in Figure 3 will have relatively low capacitance. This does not prevent the level sensor operating but the capacitances are harder to measure accurately.

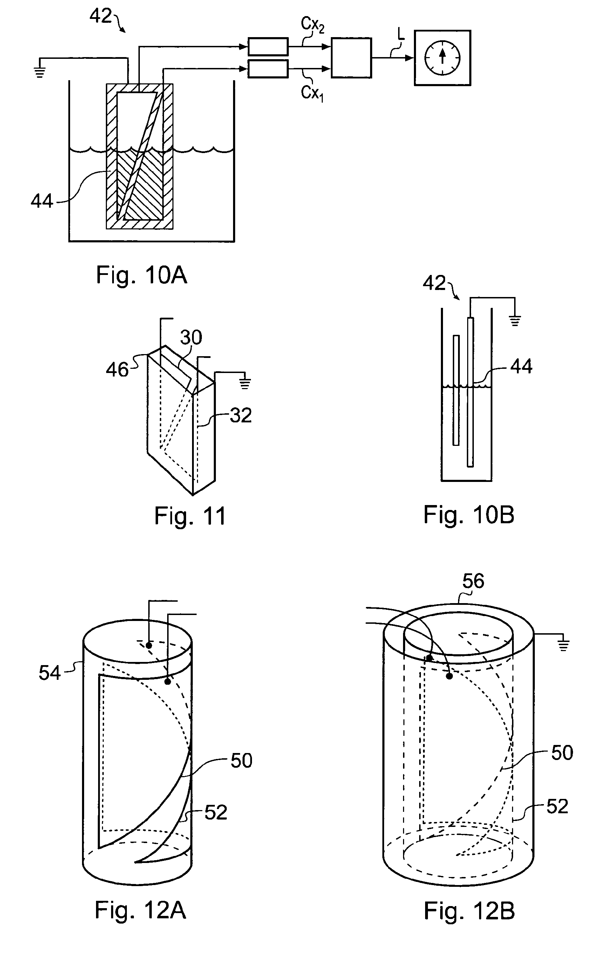

Figures 10A and 10B are schematic drawings showing respective front and side views of a level sensor 42 according to a second embodiment of the invention. Many of the elements of the level sensor 42 and its manner of operation are similar to and will be understood from the above description of the level sensor 28 of Figure 3 and are not described further. However, the level sensor 42 additionally includes an electrically conducting backing plate 44. The backing plate 44 is held at a reference potential of the first and second driver circuits, in this case, an electrical ground. The backing plate is held parallel to and in close proximity to the level-sensing elements. As can be seen from Figure 10B, substance in the container fills the gap between the level-sensing elements and the backing plate up to the substance level. This configuration of level sensor is appropriate for use with a poorly conducting substance, the capacitance of the level-sensing elements being increased over those of Figure 3 by the presence of the backing plate.

In cases where the substance is in a metallic container, the container can be held at a reference potential of the first and second driver circuits and the level-sensing elements placed in close proximity to a container wall. In this way, a section of the container wall acts in the same way as the backing plate 44 of Figure 10A and 10B to increase the capacitance of the level-sensing elements.

Figure 11 is a schematic drawing showing level-sensing elements 30, 32 and a backing plate 46 of a level sensor according to a third embodiment of the invention. Other parts of the level sensor are not shown for simplicity. The backing plate 46 performs the same function as that of Figures 10A and 10B. However, the backing plate 46 of Figure 11 to arranged to enclose the level-sensing elements as shown in the figure. This helps to shield the level-sensing elements from external influences which might change their capacitance, or otherwise interfere with capacitance measurement.

Figure 12A is a schematic drawing showing level-sensing elements 50, 52 and of a level sensor according to a fourth embodiment of the invention. The level sensor of Figure 12A differs from that of Figure 3 in that the planar level-sensing electrodes 30, 32 of Figure 3 are replaced with level-sensing electrodes of the same surface geometry but mounted on a dielectric cylinder 54. A level sensor having the level sensing-elements of Figure 12A functions according to the same principles as described above. However, the cylindrically mounted level sensing electrodes provide a compact arrangement which can be useful, for example, if the level sensor is to be installed through a small opening in an otherwise closed container. Figure 12B shows the level-sensing elements of Figure 12A mounted inside a cylindrical backing plate 56. The backing plate 56 performs the same function as the backing plate 46 of Figure 11 and its cylindrical structure helps to maintain the compact arrangement of Figure 12A.

Although a particular pairing of triangular level-sensing elements has been described above, this arrangement is way of example only. There are numerous other ways of providing first and second level-sensing elements having differing response functions.

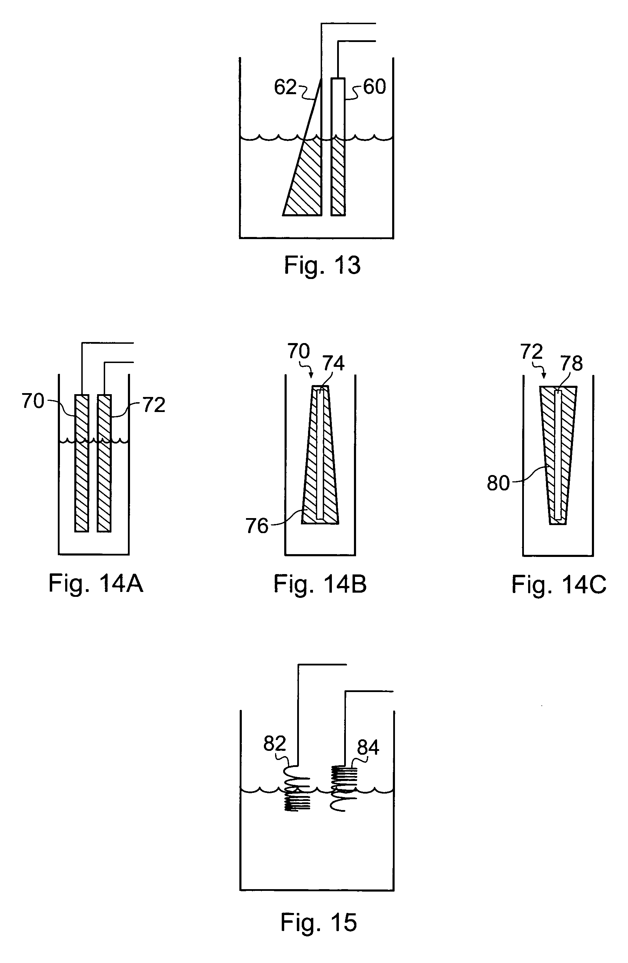

Figure 13 shows first and second level-sensing elements 60, 62 having first and second response functions for use in a level sensor according to a fifth embodiment of the invention. First level-sensing element 60 is similar to level-sensing element 8 shown in Figure 1 and has a response function given by Equation 1. Second level-sensing element 62 is similar to level-sensing element 32 shown in Figure 3 and has a response function given by Equation 3. For a substance level $l$, the first and second level-sensing elements have capacitance $C_{x1}$ and $C_{x2}$ respectively given by the functions given in Equations 1 and 8. A processor (not shown) is again operable to form the ratio R of the measured capacitances $C_{x1}$, $C_{x2}$, such that

$$R = \frac{C_{X2}}{C_{X1}} = \frac{k \bullet \left[ cl - \frac{cl^2}{2d} \right]}{k \bullet [al]} \qquad \text{(Equation 12)}.$$

Equation 12 reduces to

$$R = \frac{2cd - cl}{2da} \qquad \text{(Equation 13)},$$

which re-arranges to

$$\frac{l}{d} = 2 - \frac{2aR}{c} \qquad \text{(Equation 14)},$$

This means that an estimate of substance level $L_{est}$ is given by

$$L_{est} = 2 - \frac{2aC_{x2}}{cC_{x1}}$$ (Equation 15).

where d is assumed to be unity so as to normalize $L_{est}$ such that it is expressed as a percentage between 0% and 100%. Although of different functional form, Equation 7 is similar to Equation 15 in that it provides an estimate of substance level $L_{est}$ from the measured capacitances $C_{x1}$, $C_{x2}$ which is insensitive to changes in dielectric constant of the substance. The processor can be configured to directly obtain $L_{est}$ from $C_{x1}$ and $C_{x2}$ from Equation 15 without explicitly needing to generate their ratio.

Many different geometries of level-sensing element are possible. All that is required is that they provide response functions having different functional dependence on actual substance level. It is important to ensure that one response function is not merely a scaled version of the other since in such cases there will be no dependence on substance level in a ratio of measured capacitances. This will generally mean that at least one of the response functions is non-linearly related to substance level. However, this is not strictly necessary. For example, two rectangular level-sensing elements (i.e. having linear responses) which are vertically overlapping but offset may be used. This arrangement is sensitive to substance levels within the range of overlap. The ratio of the measured capacitances from such an arrangement is insensitive to absolute values of dielectric constant, but includes a component dependent on the ratio of the substance level to the magnitude of the vertical offset.

Figure 14A is a schematic drawing showing a front view of first and second level-sensing elements 70, 72 for use in a level sensor according to a sixth embodiment of the invention. Figures 14B and 14C respectively show side section views of the first and second level-sensing elements respectively. The first level-sensing element 70 comprises a thin rectangular electrode 74 coated in a dielectric coating 76. The second level-sensing element 72 comprises an identically sized rectangular electrode 78 coated in a dielectric coating 80. The dielectric coating 76 of the first level-sensing element 70 is of variable thickness, being thicker towards the bottom of the electrode 74 than at the top. The dielectric coating 80 of the second level-sensing element 72 is also of variable thickness, being thicker towards the top of the electrode 78 than at the bottom. These differences in the thickness of the dielectric coating of the two level-sensing elements provides for differing response functions, thus allowing the level-sensing elements to be used in a manner similar to that described above to provide an estimate of substance level.

Figure 15 is a schematic drawing showing first and second level-sensing elements 82, 84 according to a seventh embodiment of the invention. The first and second level-sensing elements comprise helically wound dielectric-coated conductors having varying pitch. In the first level-sensing element, the winding pitch increases towards the bottom of the level-sensing element. In the second level-sensing element, the winding pitch increases towards the top of the level-sensing element. This variation in winding pitch provides each of the level-sensing elements with different response functions. This allows a comparison between the measured capacitance of each to provide an estimate of substance level in a manner broadly similar to those described above.

In other examples, level-sensing elements may configured such that they are placed at different inclinations (hence changing separation with height) to a backing plate so as to provide suitably different response functions.

It will be appreciated from the above that there are a number of different ways in which level-sensing elements having different response functions can be formed. In some simple cases, such as those shown in Figure 3 and 13 it can be possible to analytically derive functional forms which relate measured capacitances to substance level, as shown in Equations 7 and 15. However, in other cases, for example where more complex level-sensing element geometries or configurations are used, it may be preferable to employ a look-up table or fitted-functions to relate substance level to measured capacitances. The look-up table or fitted-functions can be obtained by calibration experiment. Complex level-sensing element geometries may arise to either regularize response functions for an irregularly shaped container or to intentionally distort a response function to achieve a particular goal, for example to provide higher resolution when substance levels are low.

To assist accurate measurement of the capacitances of the first and second level-sensing elements, it can be desirable to monitor the capacitance of each one separately in an alternating fashion while the other is shorted to a reference potential of the driver circuits. This can help to reduce effects of field cross-coupling between the level-sensing elements. In addition, when a ratio between two measured capacitances is formed it can be desirable to configure the processor to subtract offsets due to background capacitance (e.g. in wiring) or which are electronically introduced. Accuracy may be improved further still by including a third (or more) level-sensing element with a third response function different to the first and second response functions. A measured capacitance of the third level-sensing can be compared with those of the first and second level-sensing elements to more tightly constrain a substance level estimate by providing improved statistical accuracy.

It will be appreciated that while the above has concentrated on a capacitive level-sensor having first and second capacitve level-sensing elements, the principles are similarly applicable or other types of level sensor where estimates of substance level are dependent on a parameter which may vary between substance samples or in response to changing conditions.

**REFERENCES**

[1]    US 6 466 036

**Claims**

1.   A level sensor (28,42) for determining a substance level, the level sensor comprising:

a first level-sensing element (30,50,60,70,82) operable to provide a first response signal which depends on substance level according to a first response function;
a second level-sensing element (32,52,62,72,84) operable to provide a second response signal which depends on substance level differently from the first level-sensing element according to a second response function that is different from the first response function; and
a processor (38) operable to process the first and second response signals in order to extract information regarding substance level therefrom.

2.   A level sensor according to claim 1, wherein at least one of the first and second response function is a non-linear response function.

3.   A level sensor according to any one of claims 1 or 2, wherein the first and second level-sensing elements have different geometries which give rise to differences in the first and second response functions.

4.   A level sensor according to any one of claims 1 to 3, wherein the first and second level-sensing elements have different coatings (76,80) which give rise to differences in the first and second response functions.

5.   A level sensor according claims 4, wherein the coating of at least one of the first and second level-sensing elements has a variable thickness.

6.   A level sensor according to any one of claims 1 to 5, wherein the first and second level-sensing elements have different placements which give rise to differences in the first and second response functions.

7.   A level sensor according to any one of the preceding claims, wherein the processor is operable to determine a ratio of the first and second response signals.

8.   A level sensor according to any one of the preceding claims, wherein the first and second level-sensing elements are capacitive level-sensing elements.

9.   A level sensor according to claim 8, wherein at least one of the capacitive level-sensing elements comprises an electrode having a face of generally triangular shape.

10.  A level sensor according to claim 8 or 9, wherein at least one of the capacitive level-sensing elements comprises a helical winding (82,84) with varying pitch.

11.  A level sensor according to any one of claims 8 to 10, wherein the first and second capacitive level-sensing elements are secured to a curved mount (54).

12.  A level sensor according to any one of claims 8 to 11, wherein the level sensor further comprises a backing plate (44,48,56) connected to an electrical ground and positioned adjacent to the first and second capacitive level-sensing elements so as to increase their capacitance.

13.  A level sensor according to claim 12, wherein the backing plate at least partially surrounds at least one of the first or second capacitive level-sensing elements.

**14.** A level sensor according to any one of the preceding claims, wherein the level sensor further comprises a third level-sensing element arranged to provide a third response signal which depends on substance level differently from the first and second level-sensing elements according to a third response function that is different from the first and second response functions and the processor is further operable to compare the third response signal and at least one of the first and second response signals.

**15.** A method for determining a substance level comprising:

providing a first response signal which depends on substance level according to a first response function; providing a second response signal which depends on substance level differently from the first response signal according to a second response function that is different from the first response function; and processing the first and second response signals in order to extract information regarding substance level therefrom.

Fig. 1 (PRIOR ART)

Fig. 2 (PRIOR ART)

Fig. 3

Fig. 4

Fig. 5

Fig. 6

Fig. 7

Fig. 8

Fig. 9

42

Cx₂

Cx₁

L

44

Fig. 10A

30

46

32

Fig. 11

42

44

Fig. 10B

54

50

52

Fig. 12A

56

50

52

Fig. 12B

Fig. 13

Fig. 14A

Fig. 14B

Fig. 14C

Fig. 15

**European Patent Office**

## EUROPEAN SEARCH REPORT

Application Number

EP 03 25 6886

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99/30117 A (BEDIA MOTORENTECHNIK GMBH ;HOFBECK MARTIN (DE); KODL GEORG (DE); V) 17 June 1999 (1999-06-17) | 1-3,6-9, 11-15 | G01F23/26 |
| Y | * page 2, line 18 - page 9, line 25; figures 1A-8 * <br> --- | 4,5 | |
| X | GB 1 569 977 A (ROBERTSHAW SKIL LTD) 25 June 1980 (1980-06-25) * page 1, left-hand column, line 30 - page 2, right-hand column, line 118; figures * <br> --- | 1-3, 6-11,15 | |
| X | US 6 490 920 B1 (NETZER YISHAY) 10 December 2002 (2002-12-10) * the whole document * <br> --- | 1-3,6-9, 12,15 | |
| X | WO 99/10714 A (NETZER YISHAY ;NETZER YOHAY (IL); MILLENNIUM SENSORS LTD (IL)) 4 March 1999 (1999-03-04) * page 38, line 3 - line 10; claims 1-5; figures 2-9D,13,16-20 * <br> --- | 1-3,6-9, 11-13,15 | |
| X | EP 0 152 644 A (MULDER RICHARD) 28 August 1985 (1985-08-28) * figures * <br> --- | 1-3,6-9, 11,15 | TECHNICAL FIELDS SEARCHED (Int.Cl.7) <br> G01F |
| Y | GB 819 712 A (SIMMONDS AEROCESSORIES LTD) 9 September 1959 (1959-09-09) * figures 1,2 * <br> ----- | 4,5 | |

The present search report has been drawn up for all claims

| Place of search | Date of completion of the search | Examiner |
|---|---|---|
| THE HAGUE | 8 April 2004 | Rose, A |

EPO FORM 1503 03.82 (P04C01)

**ANNEX TO THE EUROPEAN SEARCH REPORT
ON EUROPEAN PATENT APPLICATION NO.**                         EP 03 25 6886

This annex lists the patent family members relating to the patent documents cited in  the above-mentioned European search report.
The members are as contained in the European Patent Office EDP file on
The European Patent Office is in no way liable for these particulars which are merely  given for the purpose of information.

08-04-2004

| Patent document cited in search report | | Publication date | Patent family member(s) | | Publication date |
|---|---|---|---|---|---|
| WO 9930117 | A | 17-06-1999 | DE | 19754093 A1 | 15-07-1999 |
| | | | WO | 9930117 A1 | 17-06-1999 |
| | | | EP | 1060366 A1 | 20-12-2000 |
| GB 1569977 | A | 25-06-1980 | NONE | | |
| US 6490920 | B1 | 10-12-2002 | AU | 9032198 A | 16-03-1999 |
| | | | EP | 1017971 A1 | 12-07-2000 |
| | | | WO | 9910714 A1 | 04-03-1999 |
| WO 9910714 | A | 04-03-1999 | AU | 9032198 A | 16-03-1999 |
| | | | EP | 1017971 A1 | 12-07-2000 |
| | | | WO | 9910714 A1 | 04-03-1999 |
| | | | US | 6490920 B1 | 10-12-2002 |
| EP 0152644 | A | 28-08-1985 | NL | 8304121 A | 01-07-1985 |
| | | | NL | 8403475 A | 02-06-1986 |
| | | | EP | 0152644 A2 | 28-08-1985 |
| | | | US | 4674329 A | 23-06-1987 |
| | | | US | 4780663 A | 25-10-1988 |
| GB 819712 | A | 09-09-1959 | NONE | | |

EPO FORM P0459

For more details about this annex : see Official Journal of the European Patent Office, No. 12/82